# EUROPEAN PATENT SPECIFICATION

(11) **EP 0 586 014 B1**
(45) Date of publication and mention of the grant of the patent: **27.11.1996**
(21) Application number: 93202530.7
(22) Date of filing: 30.08.1993
(51) Int. Cl.: C09K 19/54, C09K 19/02, G02F 1/1333

(54) **Optical modulation device**
Einrichtung zur optischen Modulation
Dispositif de modulation optique

(30) Priority: 01.09.1992 EP 92202635
(43) Date of publication of application: 09.03.1994
(73) Proprietor: Philips Electronics N.V., 5621 BA Eindhoven (NL)
(72) Inventor: Hikmet, Rifat Ata Mustafa, NL-5656 AA Eindhoven (NL)
(74) Representative: van der Veer, Johannis Leendert

(56) References cited:
- EP-A- 0 313 053
- EP-A- 0 451 905
- EP-A- 0 506 176
- WO-A-92/04421
- Derwent Publications Ltd., London, GB; AN 92-09287 & JP-A-4 029 219 (IDEMITSU KOSAN) 31 January 1992
- PATENT ABSTRACTS OF JAPAN vol. 012, no. 143 (C-492)30 April 1988 & JP-A-62 260 841 (CHISATO KAJIYAMA) 13 November 1987
- Derwent Publications Ltd., London, GB; AN 92-09287 & JP-A-4 029 219
- PATENT ABSTRACTS OF JAPAN vol. 012, no. 143 (C-492)30 April 1988 & JP-A-62 260 841

## Description

The invention relates to an optical modulation device comprising two substrates, which are provided with at least one electrode, and an optically active layer which is located between said two substrates, the optically active layer comprising a liquid crystalline material having ferroelectric, antiferroelectric or electroclinic properties. The invention also relates to a modulation device in the form of a display device. Said modulation devices can be used in electro-optic light shutters, for example for optical printers, and in drivable optical filters and splitters.

An optical modulation device of the type mentioned in the opening paragraph is known *per se* from, for example, European Patent Appliction EP-A 406705. The display device or display described therein comprises two parallel transparent glass substrates which are provided with a matrix of transparent electrodes of, for example, indium-tin-oxide (ITO) on the sides facing each other. An orientation layer of, for example, rubbed polyimide is provided on said electrodes. The substrates are positioned with respect to each other by means of spacers, for example, in the form of optical fibres having a specific diameter. An optically active layer of liquid crystalline material is present between both substrates.

At the operating temperature of the device the liquid crystalline material is in the so-called chiral smectic C-phase (Sc∗-phase). In this state the material exhibits ferroelectric properties such as spontaneous polarization. If the optically active layer is sufficiently thin all chiral liquid crystalline molecules are oriented by the orientation layers in such a way that they extend parallel to the substrate surfaces. Under said conditions the direction of polarization of the liquid crystalline molecules is substantially transverse to the substrate surfaces. *Via* the electrodes, an electric field can be applied transversely across the optically active layer. As a result, all chiral liquid crystalline molecules are polarized in the same direction. The direction of polarization can be reversed by means of an oppositely directed field. In the absence of an external magnetic or electric field an adjusted direction of polarization is maintained for a relatively long period of time. Thus, such a ferroelectric modulator exhibits bistability.

Polarizers having mutually crossed directions of polarization can be provided on the surfaces of the substrates facing away from each other. Such a device can be used as an electro-optic display device, in which the optical transparency of the various pixels can be switched by means of an electric field.

Such ferroelectric modulation devices have important advantages over the more widely known optical modulation devices comprising chiral liquid crystalline materials of the so-called TN-type (twisted nematic). The operation of the latter devices is based on changes in the orientation of the molecules of the liquid crystalline material in the nematic phase as a result of the application of an electric field. Due to the relatively long relaxation time of the liquid crystalline molecules after the field has been discontinued, such modulation devices have an intrinsically relatively long response time of the order of tens of milliseconds. In contrast, the operation of ferroelectric modulation devices is based on changes of the polarization direction of the molecules of the liquid crystalline material in the chiral smectic phase as a result of the application of an electric field. Said changes are intrinsically relatively fast. Consequently, ferroelectric modulation devices have a typical response time of a few microseconds. A further advantage of ferroelectric modulators is that, in comparison with TN modulators, the image contrast is governed less by the viewing angle.

However, state-of-the-art ferroelectric optical modulation devices have a number of important disadvantages. One such disadvantage relates to providing and maintaining grey levels. It is known *per se* that such grey levels can be obtained by rapid modulation of the applied electric field. However, when this field is removed the adjusted grey level disappears soon. Thus, the use of the known modulators does not allow adjusted grey levels to be "passively" maintained for a relatively long period of time. Further, it is known from "Ferroelectrics", vol. 121, pp. 1-29 (1991) that by means of specific texturing processes grey levels can be obtained which, in the absence of an electric or magnetic field, are maintained for a relatively long period of time. In practice it has been found however that such texturing processes are very expensive and difficult to realise, while the reproducibility of the grey levels obtained leaves much to be desired. A further important disadvantage of the known ferroelectric modulators is their sensitivity to shocks, which was found to be relatively high.

It is an object of the invention to overcome the above-mentioned disadvantages. The invention more particularly aims at providing an optical modulation device of relatively simple construction, which enables grey levels to be realised which are maintained in the absence of an electric field. In addition, the modulation device in accordance with the invention must have a relatively low sensitivity to shocks.

These and other objects of the invention are attained by an optical modulation device of the type described in the opening paragraph, which is characterized according to the invention in that the optically active layer comprises a permanently oriented anisotropic three-dimensionaly, network of polymerized liquid crystalline material containing free molecules of a chiral liquid crystalline material.

The optically active layer of the modulation device in accordance with the invention is manufactured as follows. A liquid crystalline mixture of polymerizable monomers of a liquid crystalline material and non-reactive molecules of a chiral liquid crystalline material is provided between the substrates of a modulation device. The liquid crystalline material is chosen to be such that, at the service temperature of the device, said mixture is in a liquid crystalline state exhibiting ferroelectric, antiferroelectric or electroclinic properties. Subsequently, the device is brought to a temperature at which the liquid crystalline material is, for example, in the nematic, smectic C or smectic A phase. Under said conditions the material is, for example, uniaxially oriented by means of orientation layers. Subsequently, the reactive monomers are polymerized to form a three-dimensional network. Said network contains the non-reactive molecules of the chiral liquid crystalline material. Due to the uniaxial orientation of said chiral molecules an anisotropic network is obtained after polymerization. Therefore, the optically active layer of the modulation device in accordance with the invention consists of a gel which comprises free, non-reactive chiral liquid crystalline molecules which are trapped, so to speak, in an anisotropic three-dimensional polymer network.

It is noted that orientations other than the above uniaxial orientations can be realised. For example, "twisted", "supertwisted" and "tilted" structures can be provided in the optically active material by a proper choice of the orientation directions of the orientation layers, the optically active material and the thickness of the cell.

It has been found that by using the modulation device in accordance with the invention grey levels can be obtained which are maintained in the absence of an electric field. The exact working mechanism of the molecules in the optical layer is not known. It is assumed that the free chiral liquid crystalline molecules are subject to interactions with the network so that also dipole orientations in the range between both extreme dipole orientations are stabilized as a result of an external electric field. It is also possible that the network stabilizes small nearby domains having mutually opposed directions of polarization for a relatively long period of time.

Further it has been found that the modulation devices in accordance with the present invention are much less sensitive to shocks than the known ferroelectric modulators. Possibly said improved sensitivity to shocks can be attributed to the extra stabilizing effect of the network on the orientation of the free chiral molecules.

The optical modulator in accordance with the invention also provides a number of other important advantages which cannot be attained with the known modulators. For example, hitherto the layer thickness of the optical layer in the known devices had to be relatively small, *i.e.* maximally 2 micrometers. At larger layer thicknesses the problem of the so-called "chevron-formation" becomes unacceptably large. Said formation involves a reduction of the brightness contrast of the modulator. Said limitation of the thickness of the optically active layer imposes high technical requirements on the manufacture of this type of modulation devices. Owing to said limitation, the production technology of the modulation devices based on the TN-effect cannot be used as in said devices layer thicknesses of minimally 3 micrometers are customarily used. In the active layer of the modulator in accordance with the invention the problem of chevron-formation occurs to a much lesser extent. This permits modulation devices to be manufactured in which the active layer has a thickness of 6 micrometers, without an appreciably contrast reduction caused by chevron-formation.

Another advantage of the inventive modulation device relates to the orientation layers. Due to the use of an anisotropic network in the active layer of the optical modulation device in accordance with the invention, the presence of orientation layers during operation of the device is, in principle, superfluous . In fact, the chiral liquid crystalline molecules in the active layer of the inventive device are oriented by the anisotropic network. Said network keeps the free chiral molecules oriented during operation of the device. However, the orientation layers are preferably present in the device to enable the free, non-reactive liquid crystalline molecules to be oriented in a simple manner during the polymerization of the anisotropic network. However, for this purpose an external electric or magnetic field can alternatively be used. In the latter case orientation layers can be omitted.

A preferred embodiment of the modulation device in accordance with the invention is characterized in that 5 to 60 wt.% of the active layer consists of an anisotropic network. It has been found that in the case of a quantity of anisotropic network below 5 wt.%, an unacceptably high degree of chevron-formation occurs at thicknesses of the active layer in excess of 4 micrometers. A quantity of anisotropic network in excess of 60 wt.% leads to a substantial increase of the switching time of the device. The best active layers comprise 10 to 50 wt.% of anisotropic network. It is noted that the quantity of anisotropic network is calculated as the ratio between the weighed-in quantity of reactive monomers from which the network is formed after polymerization and the weighed-in quantity of non-reactive chiral liquid crystalline material present in the optically active layer as free molecules after polymerization.

A further preferred embodiment of the inventive optical modulation device is characterized in that the network is composed of a polymer which is formed from reactive monomers having at least two reactive groups on the basis of acrylates, methacrylates, epoxy compounds and/or thiolene systems. Said reactive monomers can be polymerized in a simple manner by means of actinic radiation in the presence of a photo-initiator. Actinic radiation is to be understood to mean herein radiation with light, in particular UV light, X-rays, gamma-rays or radiation with high-energy particles such as electrons and ions. In the polymerization of the above-mentioned monomers no low-molecular by-products are formed which might adversely affect the optical properties of the modulation device. Examples of the composition of such networks are described in EP-A 451905. It is noted that such networks can alternatively be formed by thermal polymerization of the above-described reactive monomers.

In accordance with a further preferred embodiment of the invention, the free molecules of the chiral liquid crystalline material in the active layer comprise one or more than one of the compounds in accordance with formulae 1-7 of the formula sheet, where R and R1 denote a non-reactive alkyl residue which may or may not be substituted. Said compounds are in the Sc∗ phase in the temperature range in which the modulation device in accordance with the invention is operated, *i.e.* in the range from -10° C to +60° C.

Another advantageous embodiment of the device in accordance with the invention is characterized in that the chiral liquid crystalline material of the optically active layer comprises free molecules having dichroic properties. This has the advantage that in the optical modulator in accordance with the invention only one polarizer has to be used. Examples of such dichroic molecules are described in European Patent Application EP-A 269062.

An interesting embodiment of the modulation device in accordance with the invention is characterized in that the anisotropic network and the free molecules of the chiral liquid crystalline material exhibit dichroic properties. In this case, not a single polarizer has to be used in the device. Formula 8 of the formula sheet shows an example of a reactive monomer having dichroic properties, which monomer can be taken up by the network in a relatively small quantity during polymerization. Said dichroic monomers may have one or more than one reactive groups.

The invention will be explained in greater detail by means of exemplary embodiments and the drawing, in which
Fig. 1 shows a ferroelectric optical modulation device
Fig. 2 shows the transmission (grey level) and the pulse sequence as a function of time of the device shown in Fig. 1
Fig. 3 diagrammatically shows an optical modulation device in accordance with the invention, in the form of a display device.

For clarity, various parts of the Figure are not drawn to scale.

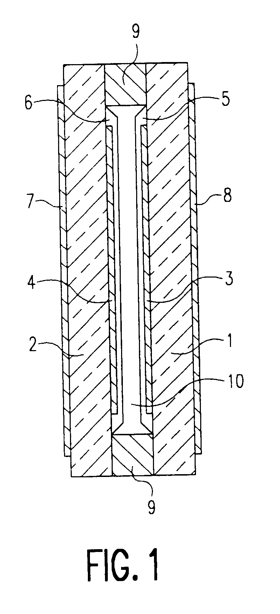

Fig. 1 is a diagrammatic sectional view of a ferroelectric optical modulation device in accordance with the invention, in the form of an electro-optical light shutter. Said shutter comprises two parallel, circular glass substrates (1, 2) which are transparent to light. On the facing surfaces of the substrates there are provided electrode layers (3, 4), for example of ITO, which are also transparent to the light for which the modulation device is used. Orientation layers (5, 6) of rubbed polyimide are provided on the electrode layers, in such a manner that both layers are rubbed parallel to each other and in the same direction. On the sides facing away from each other the substrates are provided with a polarizer (7, 8). Both polarizers are polarized in mutually crossed directions. A fixed interval of 6 micrometers between the facing surfaces of the orientation layers is maintained by means of a spacer (9). An optically active layer (10) is situated between the orientation layers.

The optical modulator of Fig. 1 was filled with a liquid crystalline mixture of reactive polymerizable monomers on the basis of diacrylates having the structural formula shown in formula 9 of the formula sheet (20 wt. %) and non-reactive chiral liquid crystalline material Zli 3654 (Merck; 80 wt.%). A quantity of 0.5 wt.% of the photo-initiator Igacure 651 (Merck) was added to this mixture. The filled cell was subsequently brought to a temperature of 80° C, at which temperature the mixture was in the nematic phase, and was oriented due to the presence of the orientation layers. Under said conditions a uniaxial orientation of the liquid crystalline molecules was obtained. Subsequently, the reactive monomers were polymerized by means of UV light to form an anisotropic network. An optically active layer having ferroelectric properties was obtained by cooling to the service temperature (25° C) of the optical shutter.

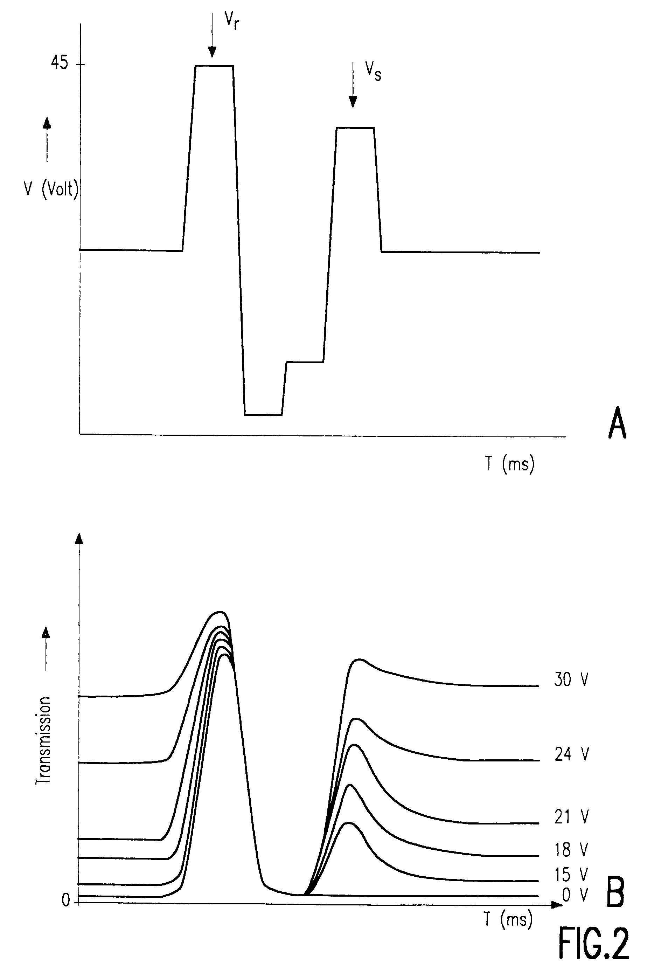

The above-described electro-optic light shutter was subjected to a number of measurements regarding the adjustability and quality of grey levels. Fig. 2-A shows a characteristic curve as a function of time of the voltage applied to the electrode layers of the light shutter. After an initial reset pulse Vᵣ having a maximum amplitude of 45 Volts, a selector pulse Vₛ lasting 60 microseconds and having any value in the range between 0 and 45 Volts was applied across the electrode layers of the shutter, after which the voltage was reduced to 0 Volt. The applied selector pulse had a value of 0, -15, -18, -21, -24 and -30 Volts. For the pulse sequence shown in Fig. 2-A use was made of a selector pulse of 30 V. The pulse sequence was repeated very many times with a frequency of 30 milliseconds.

Fig. 2-B shows the transmission variation as a result of said voltage-pulse sequence, measured on the same time scale as indicated in Fig. 1-A. The grey level of the optical modulator could be adjusted as a function of the value of the selector pulse. If the pulse sequence was interrupted immediately after the selector pulse had been produced, it was found that the grey level thus adjusted was maintained for a relatively long period of time, *i.e.* for at least 60 minutes. The grey level was not affected by shocks to which the optical shutter was subjected.

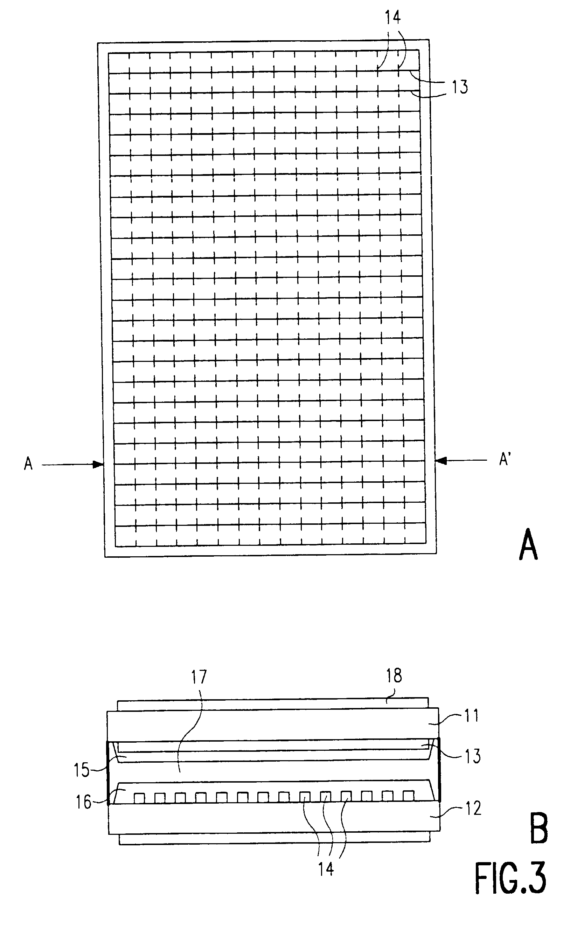

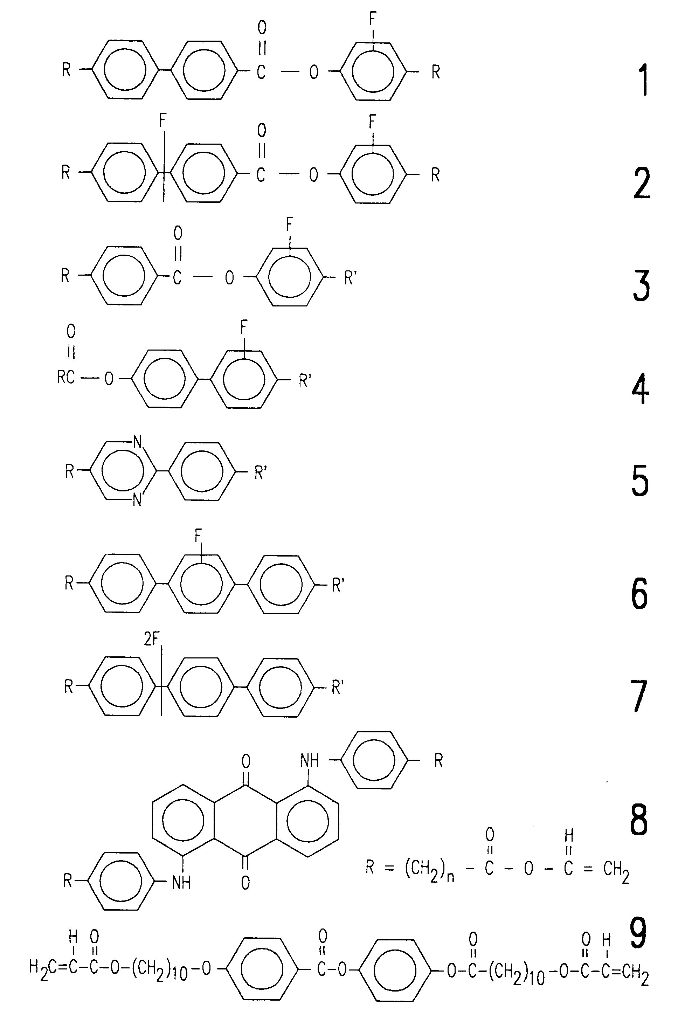

Fig. 3 diagrammatically shows a ferroelectric optical light modulator in accordance with the invention, which is configured as a display device. Fig. 3-A is a top view of the device. Fig. 3-B is a sectional view of the device, taken on the line A-A' of Fig. 3-A. The display device comprises two glass substrates (11, 12) which are provided with a matrix of transparent electrode layers (13, 14) on the sides facing each other. Said electrode layers can be individually driven *via* electrically conductive tracks (not shown). On the matrix of the electrode layer there is provided an orientation layer (15, 16) of rubbed polyimide. The distance between both orientation layers is 3.6 micrometers. Said distance forms the thickness of the optical active layer (17).

The display device of Fig. 3 was filled with a mixture of reactive polymerizable monomers on the basis of diacrylates having the above-mentioned structural formula (30 wt.%) and non-reactive chiral liquid crystalline material Zli 3654 (Merck) (70 wt.%). A quantity of 0.4 wt.% of the photo-initiator Igacure 651 (Merck) was added to this mixture. The filled cell was subsequently brought to a temperature of 90° C, at which temperature the mixture was in a smectic phase and the liquid crystalline parts of the molecules were oriented towards the orientation layers (18, 19) which had the same direction of rubbing, after which said cell was oriented by means of an electric field. Under said conditions a uniaxial orientation of the liquid crystalline molecules was obtained. Subsequently, the reactive monomers were polymerized to form an anisotropic network by means of actinic radiation such as UV light. By cooling to room temperature a display device was obtained having an optically active layer with ferroelectric properties. It is noted that the above-described passive matrix display can also be configured as an active matrix display.

It was found that, despite the relatively large thickness of the optically active layer, the reduction of the brightness contrast as a result of chevron-formation was relatively small. Further, it was found that in the inventive display device adjusted grey levels can be maintained for a relatively long period of time. Also the sensitivity to shocks of the device was relatively small.

## Claims

1. An optical modulation device comprising two substrates, which are provided with at least one electrode, and an optically active layer which is located between said two substrates, the optical active layer comprising a liquid crystalline material having ferroelectric, antiferroelectric or electroclinic properties, characterized in that the optically active layer comprises a permanently oriented anisotropic, three-dimensional network of polymerized liquid crystalline material, said network containing free molecules of a chiral liquid crystalline material.

2. A modulation device as claimed in Claim 1, characterized in that 5 to 60 wt. % of the active layer consists of an anisotropic network.

3. A modulation device as claimed in Claim 1 or 2, characterized in that the network is composed of a polymer formed from reactive monomers having at least two reactive groups on the basis of acrylates, methacrylates, epoxy compounds and/or thiolene systems.

4. A modulation device as claimed in Claim 1, 2 or 3, characterized in that the free molecules of the chiral liquid crystalline material in the active layer comprise one or more than one of the compounds in accordance with formulae 1-7 of the formula sheet.

5. A modulation device as claimed in one of the preceding Claims, characterized in that the chiral liquid crystalline material comprises free molecules having dichroic properties.

6. A modulation device as claimed in Claim 1-4, characterized in that the anisotropic network and the free molecules of the chiral liquid crystalline material exhibit dichroic properties.

7. A modulation device as claimed in one of the preceding Claims, in the form of a display device, comprising two substrates which are provided with a number of electrodes and an optically active layer which is located between said two substrates.

## Patentansprüche

1. Optische Modulationseinrichtung mit zwei Trägern, die mit mindestens einer Elektrode versehen sind, und mit einer optisch aktiven Schicht, die sich zwischen den beiden genannten Trägern befindet, wobei diese optisch aktive Schicht ein flüssigkristallines Material mit ferroelektrischen, antiferroelektrischen oder elektroklinischen Eigenschaften aufweist, dadurch gekennzeichnet, daß die optisch aktive Schicht ein festorientiertes anisotropes dreidimensionales Netzwerk aus polymerisiertem flüssigkristallinem Material aufweist, in dem sich freie Moleküle aus einem chiralen flüssigkristallinen Material befinden.

2. Modulationseinrichtung nach Anspruch 1, dadurch gekennzeichnet, daß 5 bis 60 Gew. % der aktiven Schicht aus einem anisotropen Netzwerk bestehen.

3. Modulationseinrichtung nach Anspruch 1 oder 2, dadurch gekennzeichnet, daß das Netzwerk aus einem Polymer besteht, das aus reaktiven Monomeren mit mindestens zwei reaktiven Gruppen auf Basis von Akrylaten, Methakrylaten, Epoxyverbindungen und/oder Thiolensystemen gebildet ist.

4. Modulationseinrichtung nach Anspruch 1, 2 oder 3, dadurch gekennzeichnet, daß die freien Moleküle des chiralen flüssigkristallinen Materials in der aktiven Schicht eine oder mehre als eine Verbindung nach den Formeln 1 - 7 des Formelblatts aufweisen.

5. Modulationseinrichtung nach einem der vorstehenden Ansprüche, dadurch gekennzeichnet, daß das chirale flüssigkristalline Material der optisch aktiven Schicht freie Moleküle aufweist mit dichroitischen Eigenschaften.

6. Modulationseinrichtung nach Anspruch 1 bis 4, dadurch gekennzeichnet, daß das anisotrope Netzwerk und die freien Moleküle des chiralen flüssigkristallinen Materials dichroitische Eigenschaften aufweisen.

7. Modulationseinrichtung nach einem der vorstehenden Ansprüche, in Form einer Wiedergabeanordnung mit zwei Trägern, die mit einer Anzahl Elektroden und einer optisch aktiven Schicht versehen sind, die sich zwischen den genannten zwei Trägern befindet.

## Revendications

1. Dispositif de modulation optique comprenant deux substrats, qui sont munis d'au moins une électrode, et d'une couche optiquement active qui se situe entre lesdits deux substrats, la couche active optique contenant un matériau cristallin liquide présentant des propriétés ferro-électriques, antiferro-électriques ou électrocliniques, caractérisé en ce que la couche optiquement active comporte un réseau tridimensionnel anisotrope orienté de façon permanente de matériau cristallin liquide polymérisé, ledit réseau contenant des molécules libres d'un matériau cristallin liquide chiral.

2. Dispositif de modulation selon la revendication 1, caractérisé en ce que 5 à 60 % en poids de la couche active est constitué par un réseau anisotrope.

3. Dispositif de modulation selon la revendication 1 ou 2, caractérisé en ce que le réseau est composé d'un polymère formé à partir de monomères réactifs présentant au moins deux groupes réactifs à base d'acrylates, composés époxy et/ou systèmes de thiolène.

4. Dispositif de modulation selon la revendication 1,2 ou 3, caractérisé en ce que les molécules libres du matériau cristallin liquide chiral dans la couche active comprennent un ou plusieurs des composés comformes aux formules 1 - 7 du formulaire.

5. Dispositif de modulation selon l'une des revendications précédentes, caractérisé en ce que le matériau cristallin liquide chiral contient des molécules libres présentant des propriétés dichroïques.

6. Dispositif de modulation selon les revendications 1 - 4, caractérisé en ce que le réseau anisotrope et les molécules libres du matériau cristallin liquide chiral présentent des propriétés dichroïques.

7. Dispositif de modulation selon l'une des revendications précédentes sous forme d'un dispositif d'affichage, comprenant deux substrats qui sont munis de plusieurs électrodes et d'une couche optiquement active située entre lesdits deux substrats.
